# EUROPEAN PATENT APPLICATION

(11) **EP 4 654 360 A1**
(43) Date of publication of application: **26.11.2025**
(21) Application number: 25173713.6
(22) Date of filing: 30.04.2025
(51) Int. Cl.: H01M 50/30, H01M 10/48, H01M 10/615, H01M 10/63, H01M 10/643, H01M 10/653, H01M 10/6571, H01M 50/213, H01M 50/503, H01M 50/512

(54) **HEATING DEVICE, BATTERY ASSEMBLY COMPRISING THE HEATING DEVICE, AND METHODS OF MAKING THE SAME**

(30) Priority: 01.05.2024 US 202463641214 P
(71) Applicant: Trojan Battery Company LLC, Santa Fe Springs, CA 90670 (US)
(72) Inventor: ANDERSON, Jon, Santa Fe Springs, 90670 (US); MASON, Mike, Santa Fe Springs, 90670 (US); GULER, Hakan, Santa Fe Springs, 90670 (US); BENDER, Chris, Santa Fe Springs, 90670 (US); KUKEL, Gary, Santa Fe Springs, 90670 (US)
(74) Representative: Patentanwälte Ruff, Wilhelm, Beier, Dauster & Partner mbB

(57) **Abstract**

A heating device, a resulting battery pack assembly (100), and the methods of making and using the same are provided. Such a battery pack assembly (100) includes a plurality of battery cells (10), at least one current collection plate (CCP) (20), and at least one heater layer (40). Each battery cell comprises two electrodes (19) extending from a first side to a second side of the assembly. The CCP is disposed over a plurality of battery cells on the first side and/or the second side, is made of a first conductive material, and defines a plurality of first holes (22). Each first hole is disposed over a respective electrode. The CCP further includes at least one connection (24) electrically connected with the respective electrode. The heater layer is disposed above the CCP, and includes a plurality of sections and each section corresponding to a respective battery cell. In each section the heater layer defines a second hole (46) and includes a heating zone (42) and a non-heating zone (44). The non-heating zone is disposed adjacent to an edge of the second hole. The heating zone includes a second conductive material embedded in a polymer composition, and the non-heating zone is made of the polymer composition. The second hole and a respective first hole provide a venting path for the respective battery cell.

## Description

### PRIORITY CLAIM AND CROSS-REFERENCE

This application claims the benefit of U.S. Provisional Application No. 63/641,214, filed May 1, 2024, which application is expressly incorporated by reference herein in its entirety.

### FIELD OF THE INVENTION

The disclosure relates to a battery heating device generally. More particularly, the disclosed subject matter relates to a battery heating device, a battery pack assembly such as Li-ion battery pack assembly comprising such a heating device, and methods of making and using the same.

### BACKGROUND

Lithium-ion (Li-ion) batteries have become increasingly used as traction batteries in battery-powered equipment, including, without limitation, electric vehicles (EVs) due to their advantages of high energy density, low self-discharge, and long cycle life. However, one drawback of lithium-ion batteries is significant reduction of performance at low temperatures mainly due to poor electrolyte conductivity, poor lithium intercalation kinetics at the electrode surfaces, and poor ionic diffusion in the electrode bulk. At low temperatures, electrochemical impedance is significantly increased, while capacity and charging and discharging power limits are significantly decreased. These reduce the vehicle performance, for example, with a shortened driving range, poor acceleration, and loss of regenerative braking energy. Therefore, a battery heating system and strategy for cold weather conditions are urgently needed to guarantee satisfactory performance of the host equipment.

The approaches for battery heating include external and internal heating. External heating refers to heating the battery by external heat sources through heat transfer, and includes air heating, liquid heating and electrothermal element heating. For air heating, a battery pack is usually equipped with a heater powered by either an onboard DC/DC converter or an external power source to generate heat, and a fan to create a convective flow around a battery pack. The low thermal conductivity of air heating leads to a relatively long heating time. Furthermore, convective heating may also cause a large temperature gradient between different cells, which can be harmful for pack operation. For liquid heating, the heating system mainly consists of a heater, heat exchanger, pump and circulation pipes. Heat is transferred from the liquid to the battery through the heat exchanger. Liquid heating provides a faster heating rate than air because of a higher thermal conductivity, but faces more design challenges because of its sealing issue. Several different approaches to electrothermal element heating, for example, using a positive temperature coefficient (PTC) material, are used or proposed. Sometimes fans are installed to facilitate air circulation, and fluids may be used to increase heat transfer. But the drawbacks may include non-uniform temperature distribution between the cells and the relatively slow heating rate.

For internal heating, internal resistance of the battery is utilized to generate heat by imposing a current such as a DC or AC current through the battery. But such an approach results in system complexity and high cost.

A battery heating device with high heating efficiency, good performance, relatively simple design, and low cost is desired for a battery, particularly Li-ion battery pack.

### SUMMARY OF THE INVENTION

A heating device, a resulting battery pack assembly, and the methods of making the same, and the methods of using the same are provided.

In accordance with some embodiments, such a battery pack assembly comprises a plurality of battery cells, at least one current collection (or collector) plate (CCP), and at least one heater layer. The battery pack assembly has a first side and a second side, and each battery cell comprising two electrodes extending from a first side to a second side.

The CCP is disposed over the plurality of battery cells on the first side and/or the second side, is made of a first conductive material, and defines a plurality of first holes. Each first hole is disposed over a respective electrode of a battery cell. The CCP further includes at least one connection electrically connected with the respective electrode.

The heater layer is disposed above the CCP, and comprises a plurality of sections. Each section corresponds to a respective battery cell. In each section, the heater layer defines a second hole and includes a heating zone and a non-heating zone. The non-heating zone is disposed adjacent to an edge of the second hole. The heating zone comprises a second conductive material embedded in a polymer composition, and the non-heating zone is made of the polymer composition. The second hole and a respective first hole provide a venting path for the respective battery cell.

The battery cells are of any suitable batteries. In some embodiments, the plurality of battery cells are lithium ion batteries.

The plurality of battery cells are connected in series or parallel, and are aligned in parallel with each other.

In some embodiments, the first conductive material comprises a single or multilayer metal or metal alloy. The at least one connection in the CCP is bent towards the electrode in the section. In some embodiments, there are two or more than two connections in each of the plurality of first holes.

In some embodiments, the second conductive material comprises a metal, a metal alloy, a conductive ceramic, graphite, carbon, or any combination thereof. The second conductive material is configured to provide resistive heating. The second conductive material may be wires or ribbons in a sinuous or winding pattern in the heating zone. The second material cross-section geometry and sizes may vary within the pattern.

The polymer composition is thermally conductive but electrically insulative. In some embodiments, the polymer composition comprises a base polymer and a thermal conductive filler. Examples of a suitable base polymer include, but are not limited to, silicone, fluorosilicone, thermoplastic elastomers, or any combination thereof.

In some embodiments, the battery pack assembly further comprises a thermally conductive layer for good bonding between the heater layer and the CCP, and efficient heat transfer. For example, the battery pack assembly comprises a thin layer of a pressure sensitive adhesive between the CCP and the heater layer in some embodiments. The pressure sensitive adhesive may be thermally conductive. The pressure sensitive material may also be electrically conductive. In some embodiments, instead of a pressure sensitive adhesive, a thermally conductive cement layer, which may also be electrically conductive, is disposed between the CCP and the heater layer. After the heater layer is installed and it is cured, the cement layer may be rigid or flexible.

In some embodiments, the battery pack assembly further comprises a thermal protector, which is disposed on the CCP or the heater layer, and is configured to limit the heater layer to generate heat at a pre-determined temperature range.

In some embodiments, the battery pack assembly further comprises at least one sensor, which is disposed on the CCP or on the heater layer or on the plurality of the battery cells. The at least one sensor is configured to sense voltage, current, and/or temperature.

In some embodiments, the battery pack assembly further comprises a controller, which is coupled with the at least one sensor. The controller is configured to direct the heater layer to generate heat based on input from the at least one sensor.

In some embodiments, the battery pack assembly comprises two CCPs disposed over a plurality of battery cells on both the first side and the second side.

In another aspect, the present disclosure provides a heating device for heating a plurality of battery cells in a battery pack assembly. The heating device comprises a current collection plate (CCP) and a heater layer. The CCP is disposed over the plurality of battery cells on a first side and/or a second side of the battery pack assembly. The CCP is made of a first conductive material and defines a plurality of first holes. Each first hole is disposed over a respective electrode. In each hole, the CCP further comprises at least one connection, for example, two connections, electrically connected with the respective electrode.

The heater layer is disposed above the CCP. The heater layer comprises a plurality of sections. Each section corresponds to a respective battery cell. In each section, the heater layer defines a second hole and comprises a heating zone and a non-heating zone. The non-heating zone is disposed adjacent to an edge of the second hole. The heating zone comprises a second conductive material embedded in a polymer composition. The non-heating zone is made of the polymer composition without the second conductive material.

The second hole and a respective first hole provide a venting path for the respective battery cell.

In some embodiments, the plurality of battery cells are lithium ion batteries. The heating device is configured to heat Li-ion battery pack or module when needed. The plurality of battery cells are connected in series or parallel, and are aligned in parallel with each other.

In some embodiments, the first conductive material comprises a single or multilayer metal or metal alloy, and the at least one connection in the CCP is bent towards the electrode in the section.

The second conductive material comprises a metal, a metal alloy, a conductive ceramic, graphite, carbon, or any combination thereof. The second conductive material is configured to provide resistive heating. The second conductive material may be in a sinuous or winding pattern in the heating zone. The second material cross-section geometry and sizes may vary within the pattern.

The polymer composition is thermally conductive but electrically insulative. In some embodiments, the polymer composition comprises a base polymer and a thermal conductive filler. In some embodiments, the base polymer is silicone, and the second conductive comprises a metal or metal alloy.

In some embodiments, the heating device further comprises a thin layer of a thermally conductive material between the CCP and the heater layer. In some embodiments, the heating device further comprises a pressure sensitive adhesive between the CCP and the heater layer. The pressure sensitive adhesive is thermally conductive. The pressure sensitive material may also be electrically conductive. In some embodiments, instead of a pressure sensitive adhesive, a thermally conductive cement layer, which may also be electrically conductive, is disposed between the CCP and the heater layer. After the heater layer is installed and it is cured, the cement layer may be rigid or flexible.

In another aspect, the present disclosure provides a method of making the heating device as described herein. Such a method includes steps of providing or making each component or layer, and assembling them together.

In another aspect, the present disclosure provides a method of making the battery pack assembly comprising a heating device as described herein. Such a method includes steps of providing or making each component or layer, and assembling them together.

In another aspect, the present disclosure also provides the methods of using the heating device and the battery pack assembly as described herein.

### BRIEF DESCRIPTION OF THE DRAWINGS

The present disclosure is best understood from the following detailed description when read in conjunction with the accompanying drawings. It is emphasized that, according to common practice, the various features of the drawings are not necessarily to scale. On the contrary, the dimensions of the various features are arbitrarily expanded or reduced for clarity. Like reference numerals denote like features throughout specification and drawings.
FIG. 1A is a plan view illustrating an exemplary battery pack assembly comprising an exemplary heater in accordance with some embodiments.
FIG. 1B is an exploded view illustrating the exemplary battery pack assembly of FIG. 1A.
FIG. 2 is a perspective view illustrating the exemplary battery pack assembly of FIG. 1.
FIG. 3A, 3B, 3C, and 3D are plan views illustrating the sides of the exemplary battery pack assembly of FIGS. 1A, 1B, and 2 viewing from the top, the front, the back, and the bottom as marked in FIG. 2, respectively.
FIG. 4 is a sectional view of the exemplary battery pack assembly of FIGS. 1A-1B along A-A' as shown in FIG. 1A.
FIG. 5 is a magnified view of a portion of the exemplary battery pack assembly of FIGS. 1A-1B.
FIG. 6 is a magnified view of a portion (FIG. 5) having one battery cell in the exemplary battery pack assembly of FIGS. 1A-1B.
FIG. 7 is a plan view of an exemplary battery pack assembly being fabricated comprising an exemplary layer of current collection plate disposed over the plurality of battery cells. The exemplary layer of current collection plate comprises six sections in accordance with some embodiments.
FIG. 8 is a plan view illustrating an exemplary battery pack assembly being fabricated comprising an exemplary layer of CCP disposed over the plurality of battery cells, and at least one sensing tab disposed on or within the layer of CCP for sensing voltage and/or temperature in accordance with some embodiments.
FIG. 9 is an illustration showing the exemplary battery pack assembly being fabricated as illustrated in FIG. 8.
FIG. 10 is a plan view illustrating one section of an exemplary layer of CCP.
FIG. 11 is a perspective and magnified view illustrating a connection portion of the exemplary layer of CCP of FIG. 10 in accordance with some embodiments.
FIG. 12 is a perspective view of an exemplary battery pack assembly being fabricated as shown in FIG. 7. The six CCP sections comprise two different sections including CCP-A and CCP-B.
FIG. 13 illustrates that the two sections CCP-A and CCP-B can be co-molded in an exemplary method in accordance with some embodiments.
FIG. 14 illustrates an exemplary layer of resistive heating element, for example, a metal wire in a winding pattern, in accordance with some embodiments.
FIG. 15 is a sectional view illustrating an exemplary structure of a heater in accordance with some embodiments.
FIG. 16 illustrates an exemplary battery pack assembly with an exemplary heater in accordance with some embodiments.
FIG. 17 is a plan view illustrating another exemplary heater in accordance with some embodiments.
FIG. 18 shows experimental data illustrating the effect of the heater on an exemplary battery pack assembly comprising a plurality of Li-ion battery cells in accordance with some embodiments.

### DETAILED DESCRIPTION

This description of the exemplary embodiments is intended to be read in connection with the accompanying drawings, which are to be considered part of the entire written description. In the description, relative terms such as "lower," "upper," "horizontal," "vertical,", "above," "below," "up," "down," "top" and "bottom" as well as derivative thereof (e.g., "horizontally," "downwardly," "upwardly," etc.) should be construed to refer to the orientation as then described or as shown in the drawing under discussion. These relative terms are for convenience of description and do not require that the apparatus be constructed or operated in a particular orientation. Terms concerning attachments, coupling and the like, such as "connected" and "interconnected," refer to a relationship wherein structures are secured or attached to one another either directly or indirectly through intervening structures, as well as both movable or rigid attachments or relationships, unless expressly described otherwise.

For purposes of the description hereinafter, it is to be understood that the embodiments described below may assume alternative variations and embodiments. It is also to be understood that the specific articles, compositions, and/or processes described herein are exemplary and should not be considered as limiting.

In the present disclosure the singular forms "a," "an," and "the" include the plural reference, and reference to a particular numerical value includes at least that particular value, unless the context clearly indicates otherwise. When values are expressed as approximations, by use of the antecedent "about," it will be understood that the particular value forms another embodiment. As used herein, "about X" (where X is a numerical value) preferably refers to ±10% of the recited value, inclusive. For example, the phrase "about 8" preferably refers to a value of 7.2 to 8.8, inclusive. Where present, all ranges are inclusive and combinable. For example, when a range of "1 to 5" is recited, the recited range should be construed as including ranges "1 to 4", "1 to 3", "1-2", "1-2 & 4-5", "1-3 & 5", "2-5", and the like. In addition, when a list of alternatives is positively provided, such listing can be interpreted to mean that any of the alternatives may be excluded, e.g., by a negative limitation in the claims. For example, when a range of "1 to 5" is recited, the recited range may be construed as including situations whereby any of 1, 2, 3, 4, or 5 are negatively excluded; thus, a recitation of "1 to 5" may be construed as "1 and 3-5, but not 2", or simply "wherein 2 is not included." It is intended that any component, element, attribute, or step that is positively recited herein may be explicitly excluded in the claims, whether such components, elements, attributes, or steps are listed as alternatives or whether they are recited in isolation.

The thermal conductivity of a material is a measure of its ability to conduct heat. The term "thermally conductive" used herein refers to a material having thermal conductivity equal to or higher than 0.5 W·m⁻¹·K⁻¹.

The electrical conductivity of a material is a measure of its ability to conduct electricity. The term "electrical conductive" used herein refers to a material having electrical conductivity higher than 100 S/m, for example, higher than 1 x10⁷ S/m for metals. The electrically conductive materials may be thermally conductive. However, a thermally conductive material may not be electrically conductive.

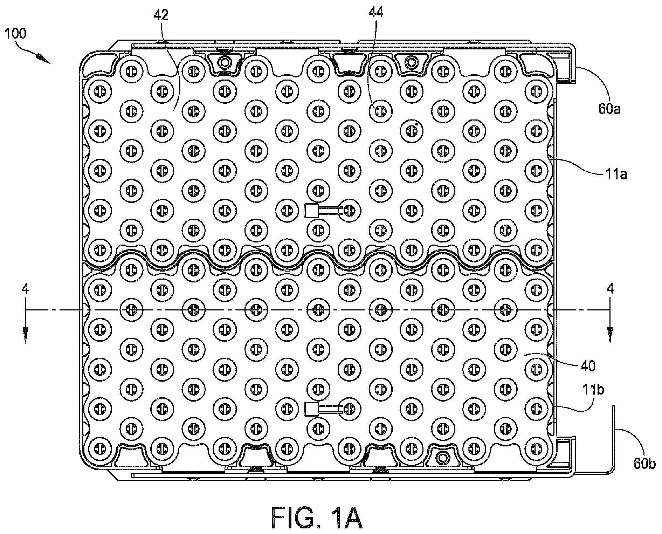

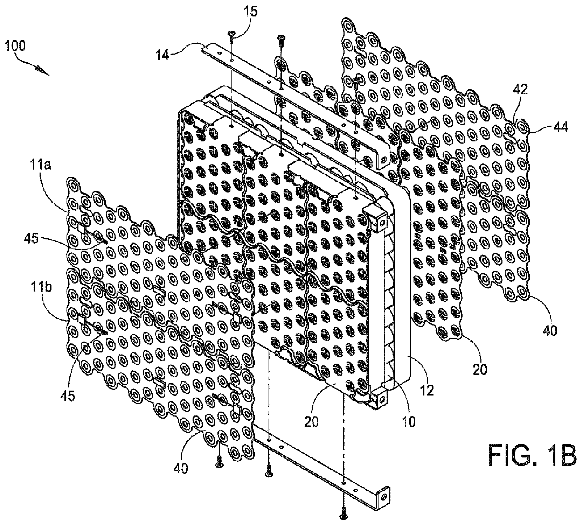

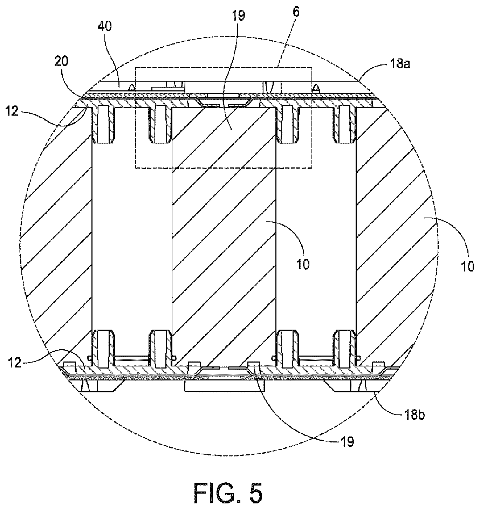

In FIGS. 1-17, like items are indicated by like reference numerals, and for brevity, descriptions of the structure, provided above with reference to the preceding figures, are not repeated. The methods described herein are described with reference to the exemplary structure described in FIGS. 1-17.

The present disclosure provides a heating device, a resulting battery pack assembly, and the methods of making and using the same.

One objective of the present disclosure is to provide a heating device for a battery pack such as a lithium-ion battery pack (or module). Lithium-ion batteries suffer in cold temperatures below zero degrees Celsius; that greatly limits their use in cold climate applications. Having a viable heating solution opens up many more sales opportunities in applications where lithium-ion would not previously work or even be considered.

One of the objectives is to provide uniform and highly efficient heating. For example, battery packs are limited by their weakest cell. Therefore, in case of uneven heating, a battery pack will suffer performance and lead to a shorter battery life.

One of the objectives is to improve the life of battery packs by maintaining more uniform temperature gradient across the cells.

Another objective is to improve the life of a battery heating device, or provide a battery heating device with improved life.

In the present disclosure, electrical resistance type heaters, optionally in combination with embedded thermal protectors, are installed on a battery module with the purpose to increase its cell core temperatures to desired levels safely and efficiently. The products and the methods provided in the present disclosure maximize the service life of the battery cells and the heaters.

Depending on the battery cell chemistry and the form, the battery cells may have specific temperature requirements for performing the best during their service life. Hence, they may need to be cooled down or heated up. The products and the method provided in the present disclosure are to enable the heating efficiently and safely.

The heater service life is best achieved when the heating element is properly heatsinked so that the maximum temperature of the heating element would not be exceeded. The other benefit of the heat sinking is to maximize the transfer rate of the generated heat so that the number of the heater on/off cycling times is minimized. In other words, the heater failure risk would be minimized when the heat produced within the heater is properly transferred to the media that is intended to heat.

The maximum work temperature of the heater can be limited to desired levels by observing the heater surface temperatures and turning the heaters off. This control mechanism can be achieved automatically using a thermal protector directly installed on the heater surface and connected to the electrical resistance heating element in series in order to sense the temperature at the source and stop the heating process.

The other method for limiting the maximum work temperature of the heater would be installing temperature sensing elements over the heater surfaces and transferring this output as an input to a current controlling device such as a battery management system or a temperature controller, which can control the current that activates the heater.

In some embodiments, the heaters can be directly installed on the modules using a pressure sensitive adhesive film between the modules and the heater. Depending on the need, the pressure sensitive film can be electrically insulated or conductive. In some embodiments, instead of a pressure sensitive adhesive, a thermally conductive cement layer, which may also be electrically conductive, is disposed between the CCP and the heater layer. After the heater layer is installed and it is cured, the cement layer may be rigid or flexible.

The life of a battery heating device in the present disclosure is improved by the unique design of the heating device and the overall battery pack assembly. The unique design of the heating device in the present disclosure enables heating elements to be located on the heat sinkable areas of a significant amount on the current collector plates (CCPs).

The battery heating device and the battery pack assembly in the present disclosure also enable venting. The unique heater design provides a plurality of venting areas for air circulation or a plurality of vent paths when a battery cell experiences a thermal event. Each venting path corresponds to each battery cell. Above each cell, voids / openings allow hot vent gasses escape away from the cells.

In accordance with some embodiments, the present disclosure provides a battery heating device, and a lithium-ion module design with the capability of increasing cell core temperatures to a desired level. The design comprises electrical-resistance-type heater(s), in combination with an embedded thermal protector. This design gives the battery the capability of increasing the core temperature of the cells to a desired temperature while protecting the heating device and the close proximity parts of the battery pack assembly from a thermal damage. In other words, this feature helps the pack / cells stay within their safety limits / recommended operating window.

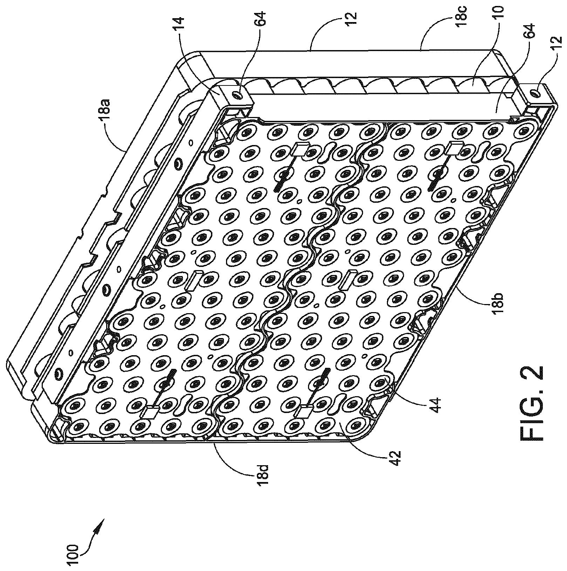

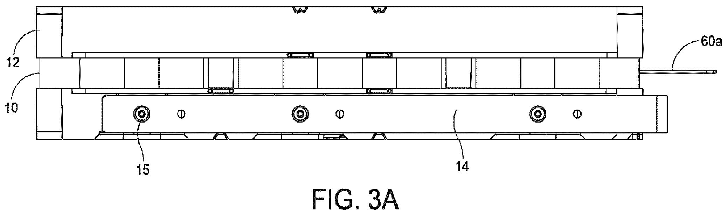

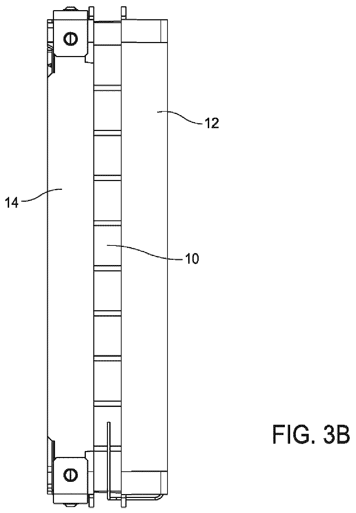

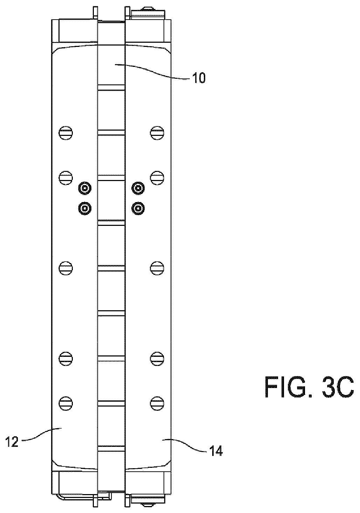

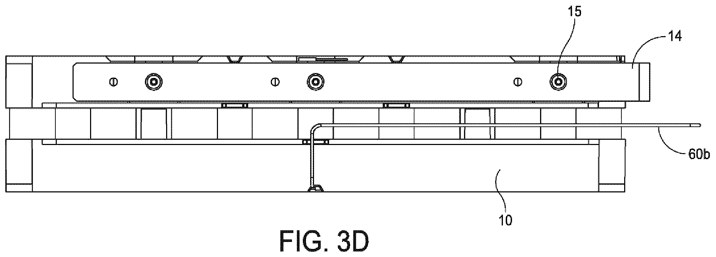

Referring to FIGS. 1A, 1B, and 2, an exemplary battery pack assembly 100 is illustrated. FIGS. 1A-1B illustrate a plan view and an exploded view, respectively, while FIG. 2 illustrates a perspective view of the exemplary battery pack assembly 100. FIG. 3A-3D illustrate a side viewed of the exemplary battery pack assembly 100 viewed from four sides such as the top, the front, the back, and the bottom, respectively.

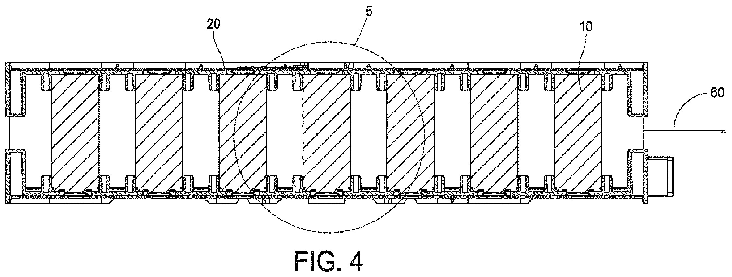

Referring to FIGS. 4-6, sectional views of the exemplary battery pack assembly 100 including a magnified view of a portion are illustrated.

In accordance with some embodiments, such a battery pack assembly 100 comprises a plurality of battery cells 10, at least one current collection plate (CCP) 20, and at least one heater layer 40. The battery pack assembly 100 has a first side 18a and a second side 18b, and each battery cell comprising two electrodes 19 extending from a first side to a second side in some embodiments. The plurality of cells can be of any suitable shapes, sizes, and/or cell configurations, are not limited to the examples illustrated in the figures. In some embodiments, as illustrated in FIG. 2, the first side 18a and the second side 18b are referred as the top side and the bottom side. Other sides are marked as 18c and 18d. The electrodes 19 on two sides may be positive or negative electrodes, and may be different from each other.

The CCP 20 is disposed over the plurality of battery cells 10 on the first side and/or the second side, is made of a first conductive material, and defines a plurality of first holes 22. The first conductive material is electrically conductive, while it maybe also thermally conductive. The first conductive material may be made of metal or alloy. Each first hole 22 is disposed over a respective cell 10, for example, disposed over an electrode 19 of a battery cell 10. The CCP 20 further includes at least one connection 24, for example, two connections as shown in FIGS. 4-6, electrically connected with a respective electrode of the respective cell 10. The connections of the CCP 20 may be in a shape of plate, and are referred as connection plates. The connection plates can be connected to the electrodes 19 of the cell 10 through a suitable process such as resistive welding, laser welding, wire bonding, or a combination thereof.

The battery cells 10 are of any suitable batteries. In some embodiments, the plurality of battery cells 10 are lithium ion batteries. Each module of the exemplary battery pack 100 comprises two cell holders 12 that sandwich a plurality of battery cells between them. The cell holders may be made of plastics. The exemplary battery pack 100 may comprise a bus-bar 14 on each side. The bus bar 14 may be fixed to the battery pack 100, for example, onto the cell holders 12 using screws 15 or snap-fits. The screws described herein can be replaced with snap-fits. The bus bar may also include a hole at one end, and is configured to hold the wires of the positive or negative terminals 60, so that the terminals 60 can be used for external electrical connections.

The plurality of battery cells 10 are connected in series or parallel, and are aligned in parallel with each other. In some embodiments, the battery cells are aligned in parallel to each other from the first side 18a to the second side 18b, and normal to a plane of the first side 18a and/or the second side 18b.

The plurality of battery cells 10 may be grouped into one or more segments 11 based on the electrodes 19, which may be positive or negative. In each segment, the electrodes 19 of the cells 10 have the same orientation, so the electrodes 19 of the respective cells in each segment 11 are collectively either positive or negative.

In the exemplary battery pack 100 as illustrated in FIGS. 1-2, two segments 11a and 11b are shown based on the electrodes 19. One of the sections includes the positive electrodes, and the other includes the negative electrodes. For examples, the segment 11a is be negative while the segment 11b is positive in some embodiments. In each section, the battery cells 10 may be connected in parallel. On the top of the surface, for example, the surface of the heater layer, there are electrical connectors 45 for connecting the heater layer 40 with an external electrical source or just the battery pack 100 itself. So the heater layer 40 may be a resistive heater. There are busbars 14 for transferring the electricity to/from CCPs 20. On the side of a bus bar 14, on the cell holders, there are cavities for routing the wires for exiting the sensor wires and heater power wires.

Referring to FIGS. 1A-1B and 4-6, the heater layer 40 is disposed above the CCP 20, and comprises a plurality of sections and each section corresponding to a respective battery cell. In each section, the heater layer 40 defines a second hole 46 and includes a heating zone 42 and a non-heating zone 44. The non-heating zone 44 is disposed adjacent to an edge of the second hole 46. The heating zone 42 comprises a second electrically conductive material embedded in a polymer composition. For example, the heating zone 42 comprises a conductive wires made of a metal and a polymer composition 48. In some embodiments, the polymer composition is flexible and is made of a suitable polymer such as silicone. The polymer composition 48 may include fillers so that the polymer composition 48 may be thermally conductive. The non-heating zone 44 is made of the polymer composition 48 without electrically conductive material. The second hole 46 and a respective first hole 22 provide a venting path for the respective battery cell 10.

In some embodiments, the first conductive material for the current collector plates (CCPs) comprises a metal or metal alloy. As illustrated in FIGS. 4-6, in some embodiments, the at least one connection 24 in the CCP 20 is bent downward. The at least one connection 24 is below a main plane of the CCP 20. The at least one connection 24 having this configuration is easy to be connected with an electrode of a battery cell 10, and also provides space for a hole 22 for venting. The hole 22 include the space 23 between the connections 24. The electrical connections between the battery cells are made via CCPs. In some embodiments, two connections 24 are in each of the plurality of first holes.

The CCP 20 is positioned over the cell holders 12 and welded to positive and/or negative poles of the cells in some embodiments. The weld points are at the locations where the tab extensions of the CCP(s) pass through the access/vent holes on the cell holders and contacts to the cells. Besides being electrically conductive, the CCP 20 is also thermally conductive and acts as the heat-sinking mass that absorb the heat generated by the heaters 40 and transfer the heat to other materials in contact to CCP 20. The heaters 40 are uniquely designed and installed over the CCP ensuring full contact of the heating zones. Once the heaters 40 turned on, the second conductive material (heating elements) 47 in the heating zone 42 generates heat, which is first transferred to the CCP 20 and then to the battery cells 10 through the welds between the CCP and the poles of the metal cells through conduction. From there, the heat reaches to internal materials of the cells 10 so as to achieve the desired temperature levels for best performance and the long service life of the cells.

The CCP 20 described herein can be one, two, or multiple CCPs. The CCP 20 may include one, two, or multiple segments of CCPs. The current collector plates (CCPs) 20 are made of a highly conductive material for current carrying purposes but also have excellent thermal conductivity.

The CCPs 20 act as a heat-sink mass that absorbs the heat generated by the heaters 40 and is then transferred to the core of the cells 10 via the tab extensions end the welds to each pole of the cell 10 through conduction. The tab extensions are also referred as the connection 24 herein and the pole may be the electrode 19 as described herein. A space 23 exists between the connection 24.

The heater layer 40 is also called the heater. The heater layer 40 described herein may be one, two, or more heaters, or includes one, two, or more segments of heaters. Such segments may matches with the segments in the CCP 20. The heater(s) can be flexible in order to conform to any deviations on the surface of the CCP(s). Each module would then be outfitted with the heaters. The heaters are designed in such a way to minimize heat loss to surrounding environment but maintain cell core temperatures recommended by the cell manufacturer.

In some embodiments, the second conductive material in the heat layer 40 comprises a metal, a metal alloy, a conductive ceramic, graphite, carbon, or any combination thereof. The second conductive material is configured to provide resistive heating. The second conductive material may be wires or ribbons in a sinuous or winding pattern in the heating zone.

The polymer composition 48 is thermally conductive but electrically insulative. In some embodiments, the polymer composition 48 comprises a base polymer and a thermal conductive filler. Examples of a suitable base polymer include, but are not limited to, silicone, fluorosilicone, thermoplastic elastomers, or any combination thereof.

In some embodiments, the battery pack assembly 100 further comprises a thermally conductive layer for good bonding and heat transfer. For example, the battery pack assembly comprises a thin layer of a pressure sensitive adhesive between the CCP and the heater layer in some embodiments. The pressure sensitive adhesive may be thermally conductive. The pressure sensitive material may also be electrically conductive.

The heater(s) can be directly installed on the modules using a pressure sensitive adhesive film between the CCP(s) and the heater(s). Depending on the need, the pressure sensitive film can be electrically insulated or conductive. In some embodiments, instead of a pressure sensitive adhesive, a thermally conductive cement layer, which may also be electrically conductive, is disposed between the CCP and the heater layer. After the heater layer is installed and it is cured, the cement layer may be rigid or flexible.

The heaters themselves are flexible to conform to any deviations on the surface of the CCPs. The heater(s) can be directly installed on the modules using pressure sensitive adhesive (PSA) on the back side of the heaters. Depending on application the PSA film can be either electrically insulated or conductive.

As an alternative, the heaters can be installed using a feature to maintain intimate contact between the heater and face of the CCPs for optimal heat transfer.

The heaters can be either pre-installed before or after the welding operation between the tab extensions of the CCP 20 and the poles of the cells 10. The heaters 40 themselves can be powered on/off by the battery itself or by an external source. When multiple heaters are energized from a single source, the heaters 40 will be connected in parallel in order to prevent over-energizing any of the heaters if/when at least one of the heater(s) does not function.

The heating elements 47 referred as heating wire or the second conductive materials are strategically located such that they will always be directly over the thermally conductive CCPs for proper heatsinking. This approach maximizes the service life of the heaters by keeping the maximum temperature of the heating elements 47 well below their design limit. In other words, the risk of heater failures is minimized by maintaining direct contact between the heater 40 and the CCPs 20 so that all the heat produced is efficiently transferred to the CCPs 20 then to the core of the cells 10.

The heater geometries are designed in a way that when installed, all the heating elements 47 of the heaters 40 would properly be heat-sinked by the CCP(s). The service life of a heater 40 is best achieved when the heating element(s) 47 of the heater are properly heat-sinked so that the working temperature of the element(s) would stay below their design temperature limit. In other words, the heater failure risk would be minimized when the heat produced within the heater is properly transferred to the media that is intended to heat. It is for the same purpose and for the protection of all the materials in close proximity of the heaters, the working temperatures of the heater(s) are limited by using a thermal switch/protector device that turns off the heater(s) as the desired temperature limit.

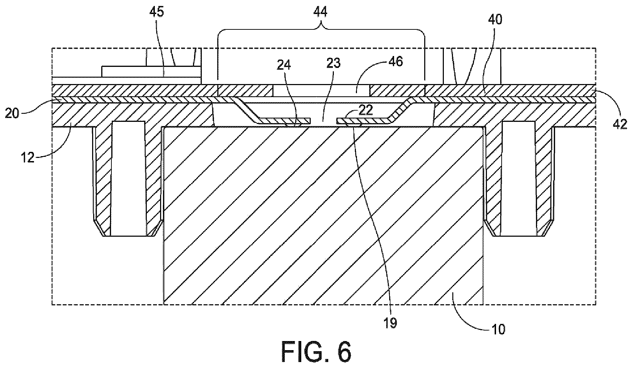

Referring to FIG. 6, the heater layer does not contact with any battery cell. The main body of the current collection plate (CCP) 20 is disposed onto a flame-resistant (FR) plastic cell holder 12, while the connection on the CCP 20 is bent downward and connects with a battery cell 10. The heater layer 40 is disposed over or on the CCP 20. The first hole 22 in the CCP 20 has an opening (or diameter) smaller than that the top dimension (or diameter) of a battery cell 10. The second hole 46 in the heater layer 40 has an opening (or diameter) smaller than that of the first hole 22 on the CCP. The heating zone 42 is approximately cover the main body of the CCP 20. The non-heating zone 44 is disposed over the first hole defined by a circular area with diameter larger than the first hole 22. The main body of the CCP 20 or the heating zone 42 of the heater layer 40 covers about a certain percentage of the top area of the battery cell based on the projected areas. In some embodiments, such a percentage may be any suitable numbers, for example, in a range of from 10% to 30%.

In some embodiments, the battery pack assembly 100 further comprises a thermal protector, which is disposed on the CCP 20 or the heater layer 40, and is configured to limit the heater layer 40 to generate heat at a pre-determined temperature range.

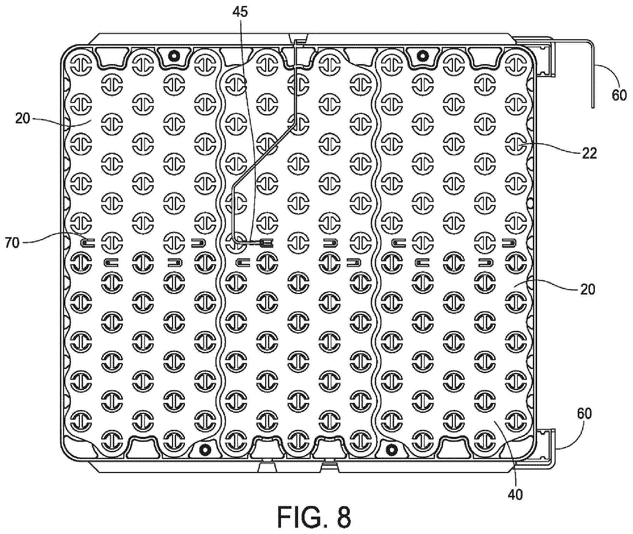

In some embodiments, the battery pack assembly 100 further comprises at least one sensor 70 (illustrated in FIG. 8). The at least one sensor is disposed on the CCP 20 and is configured to sense voltage, current, and/or temperature.

In some embodiments, the battery pack assembly 100 further comprises a controller, which is coupled with the CCP 20 or the plurality of battery cells 10. The controller is configured to direct the heater layer 40 to generate heat or not based on input from the at least one sensor.

The thermal protector limits the maximum working temperature of the heater to desired levels by observing the heater surface temperatures and turning the heaters off. This control mechanism can be achieved automatically using a thermal protector directly installed on the heater surface and connected to the electrical resistance heating element in series in order to sense the temperature at the source and stop the heating process. The other method for limiting the maximum working temperature of the heater would be installing temperature sensing elements over the heater surfaces and transferring this output as an input to a current controlling device such as a Battery Management System or to a Temperature Controller which can control the current that activates/de-activates the heater.

When the modules with heaters used in a battery pack/system, the control of the heaters is achieved via contactors or relays activated by temperature-sensing printed circuit board (PCB) switch(es) or thermal controller(s).

In some embodiments, the battery pack assembly 100 comprises two CCPs 20 disposed over a plurality of battery cells on both the first side and the second side. A heater layer is disposed on either CCP 20 as illustrated in FIG. 2.

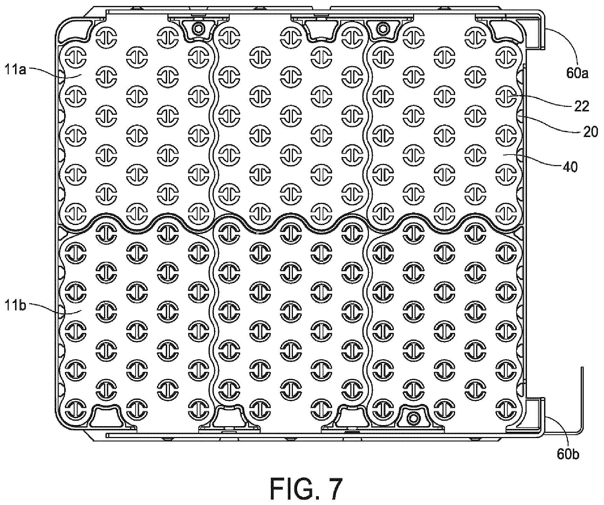

Referring to FIG. 7, an exemplary battery pack assembly being fabricated is illustrated. Such an assembly comprises an exemplary layer of current collection plate (CCP) 20 disposed over the plurality of battery cells 10. A heater layer 40 is configured to be disposed on or adjacent to the CCP 20. The exemplary layer of CCP comprises six segments 11 (or sections) in accordance with some embodiments. As shown in FIG. 7, six segments 11 are illustrated. In each segment 11, 25 battery cells 10 connected in parallel to each other provide a supercell. Three segments 11a on the top are connected in parallel to provide a negative segment with 75 cells connected with a negative terminal 60a. Similarly, three segments 11b on the bottom are connected in parallel to provide a positive segment with 75 cells connected with a negative terminal 60b.

Referring to FIG. 8, an exemplary battery pack assembly being fabricated is illustrated. Such an assembly comprises an exemplary layer of CCP 20 disposed over the plurality of battery cells 10, and at least one sensing tab 70 disposed on or within the layer of CCP for sensing voltage and/or temperature in accordance with some embodiments. The at least one sensor is disposed on the CCP 20 and is configured to sense voltage, current, and/or temperature. The battery pack illustrated in FIG. 8 includes three segments. Some battery cells may be also connected in series. For example, on the right side of the battery pack illustrated in FIG. 8, the battery cells may be connected in series.

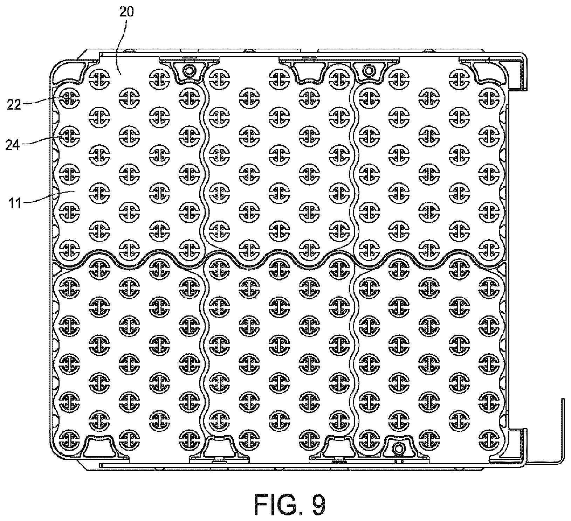

FIG. 9 illustrates the exemplary battery pack assembly being fabricated as illustrated in FIG. 7. In FIG. 9, the CCP 20 disposed on cells 10 is illustrated. The cells 10 provide six supercells, and each segment provides a supercell. As shown in FIGS. 7 and 9, the heater layer 20 may include more than one segments, for example, six segments. The exemplary heater layer 20 illustrated in FIG. 9 is used in the exemplary battery pack illustrated in FIG. 7.

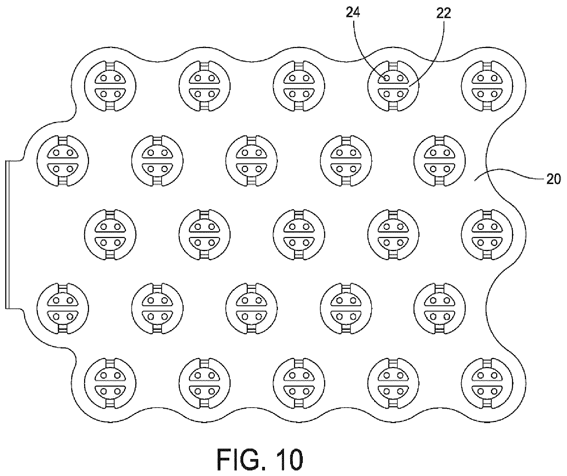

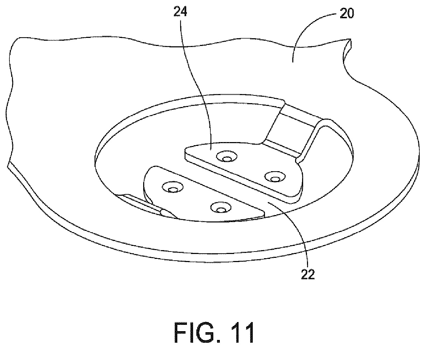

FIG. 10 is a plan view illustrating one segment of an exemplary layer of CCP 20. FIG. 10 shows the structure of the first holes 22 and the two connectors 24 in each first hole of the CCP 20 in some embodiments as described herein. FIG. 11 is a perspective and magnified view illustrating a connection portion of the exemplary layer of CCP 20 of FIG. 10 in accordance with some embodiments. In some embodiments, the first holes 22 are circular. The two connectors 24 in each first hole of the CCP 20 are below the plane of the main body of the CCP 20. The connectors 24 are also referred as "weld tabs" and may include dimples or projections used to concentrate the energy for the welding process such as resistive welding, laser welding, or wire bonding.

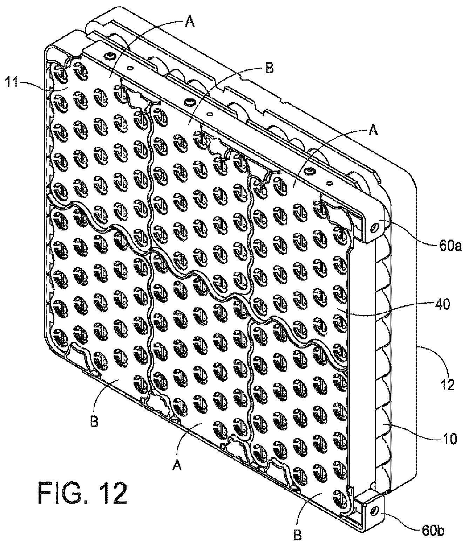

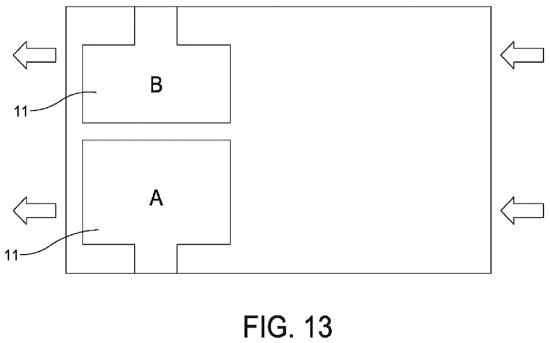

FIG. 12 is a perspective view of an exemplary battery pack assembly 100 being fabricated as shown in FIG. 7. The six CCP sections (or segments) 11 comprise two different sections including CCP-A and CCP-B. FIG. 13 illustrates that the two sections CCP-A and CCP-B can be co-molded in an exemplary method in accordance with some embodiments. Physically, Sections A are the same, and Sections B are the same. This will simplify the manufacturing process at reduced cost. The segments on the top, for example, Sections A-B-A may electrically connect with negative terminal 60a. The segments on the bottom, for example, Sections B-A-B may electrically connect with positive terminal 60b.

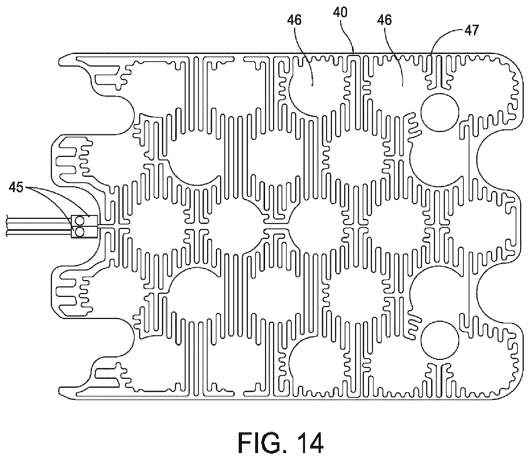

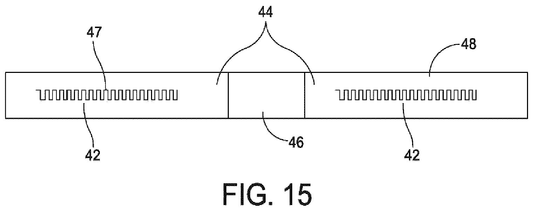

FIG. 14 illustrates an exemplary layer of resistive heating element 47, for example, a metal wire in a winding or sinuous pattern, in a heater layer 40, in accordance with some embodiments. The wires may be made of a single wire for each segment and have two ends connected with electrical connectors 45. Or the wires include different groups of wires connected in parallel. The wires also define holes in the middle, i.e., the second holes 46, corresponding to the non-heating zone 44 as illustrated in FIG. 15. The layer of resistive heating element 47 is configured to be embedded into the polymer composition 48 to provide the heater layer 40 as illustrated in FIG. 15.

FIG. 15 illustrates an exemplary structure of a heater in accordance with some embodiments. The heating zone 42 comprises a second conductive material, i.e., resistive heating element 47, embedded in a polymer composition. The non-heating zone 44 is made of the polymer composition 48 without the second conductive material. The second holes 46 in the heater layer, together with the first holes in the CCP, provide a vent path in the battery pack assembly.

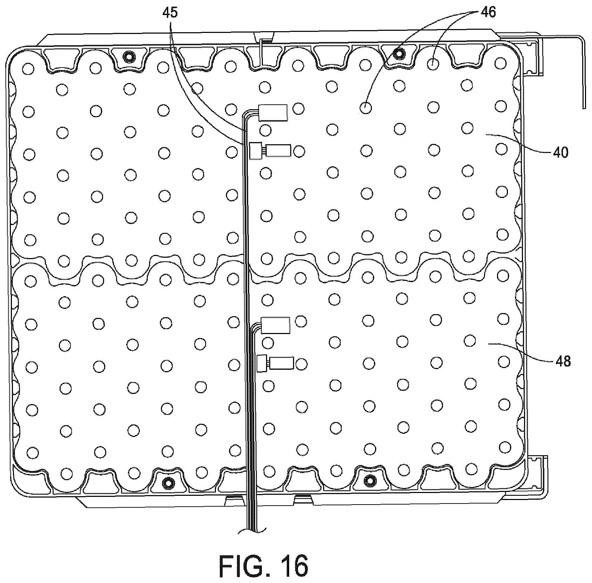

FIG. 16 further illustrates an exemplary battery pack assembly with an exemplary heater 40 in accordance with some embodiments. In some embodiments, the heating elements 47 are embedded in the polymer composition 48. In some embodiments, the polymer composition 48 is a silicone composition, which is thermally conductive, and may be formulated in a different color, for example, red color.

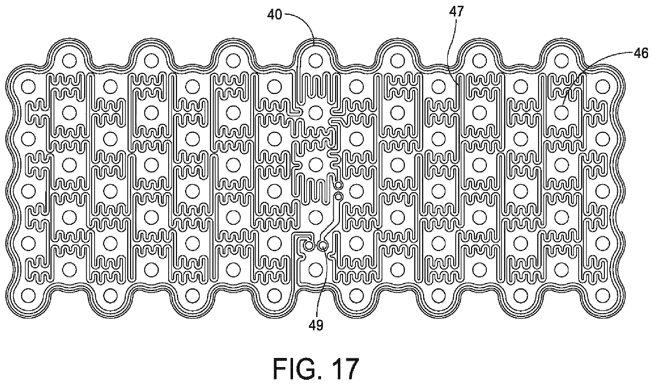

FIG. 17 illustrates another exemplary heater layer 40 in accordance with some embodiments. The wires made of a second conductive material are in a different sinuous or twisting pattern compared that shown in FIG. 14. The wires may be a single wire or groups of different wires connected in parallel, and have end points 49 to be connected with electrical connectors 45.

In another aspect, the present disclosure provides a heating device for heating a plurality of battery cells 10 in a battery pack assembly. The heating device comprises a current collection plate (CCP) and a heater layer. The CCP is disposed over the plurality of battery cells on a first side and/or a second side of the battery pack assembly. The CCP is made of a first conductive material and defines a plurality of first holes. Each first hole is disposed over a respective electrode. In each hole, the CCP further comprises at least one connection, for example, two connections, electrically connected with the respective electrode.

The heater layer is disposed above the CCP. The heater layer comprises a plurality of sections. Each section corresponds to a respective battery cell. In each section the heater layer defines a second hole and comprises a heating zone and a non-heating zone. The non-heating zone is disposed adjacent to an edge of the second hole. The heating zone comprises a second conductive material embedded in a polymer composition. The non-heating zone is made of the polymer composition without the second conductive material.

The second hole and a respective first hole provide a venting path for the respective battery cell.

In some embodiments, the plurality of battery cells are lithium ion batteries. The heating device is configured to heat Li-ion battery pack or module when needed. The plurality of battery cells are connected in series or parallel, and are aligned in parallel with each other.

In some embodiments, the first conductive material comprises a metal or metal alloy, and the at least one connection in the CCP is bent downward.

Examples of a suitable second conductive material include, but are not limited to, a metal, a metal alloy, a conductive ceramic, graphite, carbon, or any combination thereof. For example, the second conductive material may comprise nickel-chrome alloy, iron-chrome aluminum alloy, tungsten, molybdenum, tantalum, silicon carbide, zirconium oxide, molybdenum disilicide, lanthanum chromite, platinum, platinum rhodium alloys, and graphite, carbon, or any combination thereof. The second conductive material is configured to provide resistive heating. The second conductive material may be in a sinuous or winding pattern in the heating zone. The second material cross-section geometry and sizes may vary within the pattern.

The polymer composition is thermally conductive but electrically insulative. In some embodiments, the polymer composition comprises a base polymer and a thermal conductive filler. In some embodiments, the base polymer is silicone, and the second conductive comprises a metal or metal alloy.

In some embodiments, the heating device further comprises a thin layer of a thermally conductive material between the CCP and the heater layer. In some embodiments, the heating device further comprises a pressure sensitive adhesive between the CCP and the heater layer. The pressure sensitive adhesive is thermally conductive. The pressure sensitive material may also be electrically conductive.

In some embodiments, the current collection plate (CCP) designs enable plenty of surface area for heater installation and heat sinking, which in return reduces the energy density of the heater that will translate to lower working temperatures and maximize heater life.

In another aspect, the present disclosure provides a method of making the heating device as described herein. Such a method includes steps of providing or making each component or layer, and assembling them together. For example, in such a method, the plurality of battery cells are provided or made. The current collection plate including one or more segments as described herein is made and placed over the battery cells. In some embodiments, on each side of the battery cells, a CCP is installed. The heat layer as described herein is made and installed above each CCP to provide the battery pack assembly as described herein.

In another aspect, the present disclosure provides a method of making the battery pack assembly comprising a heating device as described herein. Such a method includes steps of providing or making each component or layer, and assembling them together.

In another aspect, the present disclosure also provides the methods of using the heating device and the battery pack assembly as described herein.

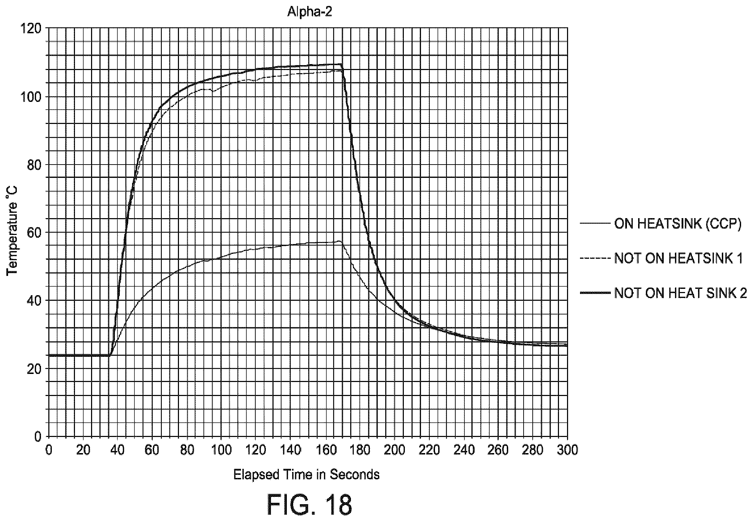

FIG. 18 shows experimental data illustrating the effect of the heater on an exemplary battery pack assembly comprising a plurality of Li-ion battery cells in accordance with some embodiments. These results were obtained from an experimental set-up including metal or metal alloy wires in a pattern, for example, as shown in FIG. 14 and Kapton as one exemplary polymer in the heater layer. The current collection plate (CCP) described herein such as that illustrated in FIG. 10 was used. In addition to current collection, the CCP was also a heat sink. The heater (240 W and 60 ohms) was powered at 58.4 V on and then off. The temperature change versus time was monitored. As shown in FIG. 18, the effect of heat sink of the CCP was observed. More experimental results were obtained to show that the heating device as described herein can provide uniform heating to the plurality of battery cells.

The controller described herein may be loaded with a program or a software to perform the methods of using the heating device and the battery pack assembly described herein. The controller may include a printed circuit board (PCB). The temperature limits can be manually or automatically set based on the battery cells and other components, and the requirements from a customer. Managed by the controller, the heaters operate based on temperature readings from the sensors positioned throughout the battery pack at defined locations from testing (temperature mapping).

The methods and system described herein may be at least partially embodied in the form of computer-implemented processes and apparatus for practicing those processes. The disclosed methods may also be at least partially embodied in the form of tangible, non-transient machine readable storage media encoded with computer program code. The media may include, for example, RAMs, ROMs, CD-ROMs, DVD-ROMs, BD-ROMs, hard disk drives, flash memories, or any other non-transient machine-readable storage medium, or any combination of these mediums, wherein, when the computer program code is loaded into and executed by a computer, the computer becomes an apparatus for practicing the method. The methods may also be at least partially embodied in the form of a computer into which computer program code is loaded and/or executed, such that, the computer becomes an apparatus for practicing the methods. When implemented on a general-purpose processor, the computer program code segments configure the processor to create specific logic circuits. The methods may alternatively be at least partially embodied in a digital signal processor formed of application specific integrated circuits for performing the methods.

The heating device provided in the present disclosure has many advantages, for example, high heating efficiency, good performance, relatively simple design, and a low cost to be manufactured. The heating device has a unique design good for a battery module, particularly Li-ion battery packs. The heating device and the battery pack assembly have improved life. The present disclosure provides a viable and controllable heating solution for lithium-ion batteries, and allow many applications, particularly in cold weather or climate, to reap the performance benefits of lithium-ion batteries when in the past these applications were either not an option or solely relied on lead-acid batteries or alternative means.

Suitable applications include, but are not limited to, light electric vehicles (LEV), material handling (MH), aerial work platforms (AWP), marine, RV, off-Grid, solar, E-Bikes, any other battery applications for medical, leisure sports and other suitable activities.

Although the subject matter has been described in terms of exemplary embodiments, it is not limited thereto. Rather, the appended claims should be construed broadly, to include other variants and embodiments, which may be made by those skilled in the art.

## Claims

1. A battery pack assembly comprising:
a plurality of battery cells, each battery cell comprising two electrodes extending from a first side to a second side of the battery pack assembly;
a current collection plate (CCP) disposed over the plurality of battery cells on the first side and/or the second side, the CCP made of a first conductive material and defining a plurality of first holes, each first hole disposed over a respective electrode, the CCP further comprising at least one connection electrically connected with the respective electrode; and
a heater layer disposed above the CCP, the heater layer comprising a plurality of sections and each section corresponding to a respective battery cell, in each section the heater layer defining a second hole and comprising a heating zone and a non-heating zone, the non-heating zone disposed adjacent to an edge of the second hole, the heating zone comprising a second conductive material embedded in a polymer composition, the non-heating zone made of the polymer composition,
wherein the second hole and a respective first hole provide a venting path for the respective battery cell.

2. The battery pack assembly of claim 1, wherein the plurality of battery cells are lithium ion batteries.

3. The battery pack assembly of claim 1, wherein the plurality of battery cells are connected in series or parallel, and are aligned in parallel with each other.

4. The battery pack assembly of claim 1, wherein the first conductive material comprises a metal or metal alloy, and the at least one connection in the CCP is bent downward.

5. The battery pack assembly of claim 1, wherein the second conductive material comprises a metal or metal alloy and is configured to provide resistive heating.

6. The battery pack assembly of claim 1, wherein the second conductive material is in a sinuous or winding pattern in the heating zone.

7. The battery pack assembly of claim 1, wherein the polymer composition is thermally conductive but electrically insulative.

8. The battery pack assembly of claim 1, wherein the polymer composition comprises a base polymer and a thermal conductive filler.

9. The battery pack assembly of claim 1, wherein the base polymer is silicone.

10. The battery pack assembly of claim 1, further comprising a pressure sensitive adhesive between the CCP and the heater layer.

11. The battery pack assembly of claim 1, further comprising a thermal protector disposed on the CCP or the heater layer, and configured to limit the heater layer to generate heat at a pre-determined temperature range.

12. The battery pack assembly of claim 1, further comprising at least one sensor disposed on the CCP and configured to sense voltage, current, and/or temperature.

13. The battery pack assembly of claim 12, further comprising a controller coupled with the CCP or the plurality of battery cells, wherein the controller is configured to direct the heater layer to generate heat or not based on input from the at least one sensor.

14. The battery pack assembly of claim 1, wherein the CCP include two CCPs disposed over a plurality of battery cells on both the first side and the second side.

15. A heating device for heating a plurality of battery cells in a battery pack assembly, comprising:
a current collection plate (CCP) disposed over the plurality of battery cells on a first side and/or a second side of the battery pack assembly, the CCP made of a first conductive material and defining a plurality of first holes, each first hole disposed over a respective electrode, the CCP further comprising at least one connection electrically connected with the respective electrode; and
a heater layer disposed above the CCP, the heater layer comprising a plurality of sections and each section corresponding to a respective battery cell, in each section the heater layer defining a second hole and comprising a heating zone and a non-heating zone, the non-heating zone disposed adjacent to an edge of the second hole, the heating zone comprising a second conductive material embedded in a polymer composition, the non-heating zone made of the polymer composition,
wherein the second hole and a respective first hole provide a venting path for the respective battery cell.

16. The heating device of claim 15, wherein the plurality of battery cells are lithium ion batteries.

17. The heating device of claim 15, wherein the plurality of battery cells are connected in series or parallel, and are aligned in parallel with each other.

18. The heating device of claim 15, wherein the first conductive material comprises a metal or metal alloy, and the at least one connection in the CCP is bent downward.

19. The heating device of claim 15, wherein the second conductive material comprises a metal or metal alloy and is configured to provide resistive heating.

20. The heating device of claim 15, wherein the second conductive material is in a sinuous or winding pattern in the heating zone.

21. The heating device of claim 15, wherein the polymer composition is thermally conductive but electrically insulative.

22. The heating device of claim 15, wherein the polymer composition comprises a base polymer and a thermal conductive filler.

23. The heating device of claim 22, wherein the base polymer is silicone, and the second conductive comprises a metal alloy.

24. The heating device of claim 15, further comprising a thin layer of a pressure sensitive adhesive between the CCP and the heater layer.

25. A method of making the heating device of claim 15.

26. A method of making the battery pack assembly of claim 1.
